# EUROPÄISCHE PATENTSCHRIFT

(11) **EP 0 491 661 B1**
(45) Veröffentlichungstag und Bekanntmachung des Hinweises auf die Patenterteilung: **25.09.1996**
(21) Anmeldenummer: 91810966.1
(22) Anmeldetag: 11.12.1991
(51) Int. Cl.: G02B 1/04, C08J 7/12

(54) **Verfahren zur Hydrophilierung von Kontaktlinsen**
Process for the hydrophilization of contact lenses
Procédé pour l'hydrophilisation de lentilles de contact

(30) Priorität: 19.12.1990 CH 4031/90
(43) Veröffentlichungstag der Anmeldung: 24.06.1992
(73) Patentinhaber: CIBA-GEIGY AG, 4002 Basel (CH)
(72) Erfinder: Mueller von der Haegen, Harro, Dr., W-8752 Laufach (DE); Schäfer, Horst, Dr., W-8750 Aschaffenburg 19 (DE); Seiferling, Bernhard, Dr.Dr., W-8752 Goldbach (DE); Siegel, Rolf, Dr., W-8700 Würzburg (DE)

(56) Entgegenhaltungen:
- EP-A- 0 073 649
- EP-A- 0 219 196
- EP-A- 0 276 631
- WO-A-91/06020
- DATABASE WPI Derwent Publications Ltd., London, GB; AN 82-70092E & US-T-102 101

## Beschreibung

Die Erfindung betrifft ein Verfahren zur Hydrophilierung von Kontaktlinsen unter Verwendung von bestimmten Verbindungen.

Die Hydrophilierung von Kontaktlinsen besteht im wesentlichen in einer Hydrophilierung der Oberfläche von Kontaktlinsen. Erhöhte Hydrophilie der Kontaktlinsenoberfläche verbessert die Benetzbarkeit der Kontaktlinsen. Dies wiederum verbessert den Tragekomfort von Kontaktlinsen. Die physikalisch-chemische Voraussetzung für die Hydrophilie einer Kontaktlinsenoberfläche liegt in der Anwesenheit von polaren funktionellen Gruppen, wie z.B. Hydroxy, Amino, Carboxy oder dergleichen.

Ueblicherweise wurde eine Hydrophilierung von Kontaktlinsenoberflächen bisher durch Plasmaaktivierung erreicht. Der apparative Aufwand hierfür ist jedoch relativ gross, ferner ist dieses Verfahren kostenintensiv. Auch ist die Dauerhaftigkeit dieser Art der Oberflächenaktivierung nicht immer befriedigend. Ein Verfahren zur Hydrophilierung von Kontaktlinsen aus epoxidhaltigen Polymeren mittels organischer Substanzen ist in EP-A-0 276 631 beschrieben.

Es besteht daher ein Bedürfnis, die bekannten Verfahren des Standes der Technik zu verbessern, um mit einfacheren Mitteln die Oberfläche von Kontaktlinsen möglichst dauerhaft mit funktionellen Gruppen zu versehen, die die Oberfläche der Kontaktlinsen hydrophil machen.

Diese Aufgabe wird erfindungsgemäss durch die Bereitstellung eines Verfahrens gelöst, nach dem man Kontaktlinsen mit speziellen Verbindungen behandelt, die aromatische (unpolare) Teile und funktionelle (polare) Gruppen aufweisen. Im Gegensatz zur Plasmabehandlung gemäss Stand der Technik lässt sich das erfindungsgemässe Verfahren in flüssiger Phase unter Bedingungen durchführen, die keinerlei apparativen Aufwand erfordern.

Die Erfindung betrifft daher ein Verfahren zur Hydrophilierung von Kontaktlinsen, dadurch gekennzeichnet dass man eine Kontaktlinse mit einer Verbindung der Formel I behandelt,

Ar-Z-Ar' (I)

worin Ar und Ar' unabhängig voneinander einen aromatischen Rest bedeuten, der mit Niederalkoxy und/oder durch Niederalkyl substituiert sein kann, und worin einer der Reste Ar oder Ar' oder beide Reste Ar und Ar' einen oder mehrere Substituenten X tragen, die unabhängig voneinander ausgewählt sind unter einer polaren funktionellen Gruppe Y, Niederalkyl, welches durch eine polare funktionelle Gruppe Y substituiert ist und Niederalkoxy, welches durch eine polare funktionelle Gruppe Y substituiert ist, und worin Z für eine zweiwertige Gruppe steht, die Ar und Ar' durch ein bis sechs Atome voneinander trennt, wobei Niederalkoxy und Niederalkyl Verbindungen und Reste mit bis zu 7 Kohlenstoffatomen umfassen.

Ein aromatischer Rest Ar oder Ar' ist ein carbocyclischer oder heterocyclischer Rest, insbesondere ein monocyclischer oder bicyclischer aromatischer Rest mit jeweils 5 oder 6 Ringatomen und bis zu 12 Ringatomen insgesamt. Ein carbocyclischer aromatischer Rest Ar oder Ar' ist Phenyl oder Naphthyl, bevorzugt Phenyl. Ein heterocyclischer aromatischer Rest Ar oder Ar' enthält bevorzugt ein bis drei Heteroatome und ist vorzugsweise monocyclisch. Beispiele hierfür sind die monovalenten Reste von Pyridin, Pyrimidin, Pyrazin, Furan, Thiophen, Pyrrol oder Thiazol.

Reste und Verbindungen, die durch den Begriff "Nieder" gekennzeichnet sind, bedeuten entsprechende Reste und Verbindungen, die bis zu 7 Kohlenstoffatome, bevorzugt bis zu 4 Kohlenstoffatome aufweisen.

Niederalkyl bedeutet Alkyl mit bis zu 7 Kohlenstoffatomen und steht z.B. für Methyl, Ethyl, Propyl, Butyl, tert.-Butyl und Hexyl.

Niederalkoxy bedeutet Alkoxy mit bis zu 7 Kohlenstoffatomen und steht z.B. für Methoxy, Ethoxy, Propoxy, Butoxy, tert.-Butoxy und Hexyloxy.

Unter den Substituenten X sind die Gruppen Y bevorzugt. Unter polaren funktionellen Gruppen Y werden im Rahmen der vorliegenden Offenbarung einwertige Gruppen verstanden, die mindestens ein Heteroatom enthalten und deren Anwesenheit Hydrophilie bewirkt. Darunter fallen beispielsweise Gruppen, die sich als reaktionsfähig, hydrolysierbar, hydratisierbar, Wasserstoffbrücken-bildend, ionogen, d.h. protonierbar oder deprotonierbar, oder ladungstragend, d.h. kationisch oder anionisch, bezeichnen lassen. Insbesondere geeignet sind Gruppen wie Hydroxy (-OH), Mercapto (-SH), Amino (-NH₂), Formyl (-CHO), Carboxy (-COOH), Carbamoyl (-CONH₂), Niederalkoxycarbonyl (-COOR, worin R für Niederalkyl steht), Carboxylato (-COO⁻), Sulfonato (-SO₃⁻), die Schwefelsäureester-Gruppe (-SO₄⁻), Sulfato (-SO₄²⁻), Phosphato (-PO₄³⁻), oder Ammonio (-NH₃⁺). Bevorzugt sind Sulfonato und Carboxy, insbesondere die Gruppe Carboxy.

Niederalkyl, das durch eine derartige Gruppe Y substituiert ist, ist insbesondere Methyl, Ethyl, Propyl oder Butyl, das eine der vorstehend genannten polaren funktionellen Gruppen trägt, z.B. Hydroxymethyl, Aminobutyl, Formylethyl, Carbamoylethyl, Carboxymethyl oder Ammoniopropyl. Niederalkoxy, das durch eine derartige Gruppe Y substituiert ist, ist insbesondere Methoxy, Ethoxy, Propoxy oder Butoxy, das eine der vorstehend genannten polaren funktionellen Gruppen trägt, insbesondere in 2- oder höherer Position, falls die Gruppe Y über ein Heteroatom gebunden ist. Beispiele hierfür sind 2-Hydroxyethoxy, 4-Aminobutoxy, Formylethoxy, Carbamoylmethoxy, Carboxymethoxy oder 3-Ammoniopropoxy.

Die zweiwertige Gruppe Z, die Ar und Ar' durch ein bis sechs Atome voneinander trennt, ist polar oder unpolar und enthält bevorzugt bis zu 10 Atome. Diese Gruppe Z fungiert als Brücke zwischen Ar und Ar'. Die zweiwertige Gruppe Z trennt Ar und Ar' insbesondere durch ein Atom voneinander. Beispiele hierfür sind reine Kohlenwasserstoffbrücken Z, wie Methylen (-CH₂-), 1,1-Ethylen (-CH(CH₃)-) oder 2,2-Propylen (-C(CH₃)₂-), ferner Hetero-Brücken Z wie Sauerstoff, (-O-), Schwefel (-S-), Sulfenyl (-SO-), Sulfonyl (-SO₂-), Amino (-NH-) oder Ammonio (-NH₂⁺-), oder Mischformen, wie Carbonyl (-CO-) oder Methylamino (-N(CH₃)-). Weitere Beispiele sind 1,2-Ethenylen (-CH=CH-) und 1,6-Phenylen. Insbesondere bevorzugt als Gruppe Z ist die Carbonylgruppe.

Bei den Verbindungen der Formel I handelt es sich, je nach der Bedeutung der Gruppe Z, beispielsweise um Diarylmethan-, Diarylethan- oder Diarylpropan-Verbindungen, um Diarylether, Diarylsulfide, Diarylsulfoxide, Diarylsulfone, Diarylamine, Diarylammoniumverbindungen oder um Diarylketone, in denen die beiden aromatischen Reste Ar und Ar' entweder dem gleichen Typus Ringsystem oder verschiedenen Typen von Ringsystemen angehören, und die im übrigen durch Niederalkyl und/oder Niederalkoxy substituiert sein können und einen oder mehrere Substituenten X tragen.

Bevorzugt sind die Verbindungen der Formel I, bei denen Ar und Ar' dem gleichen Typus aromatischer Ringsysteme angehören, und die im übrigen durch Niederalkyl und/oder Niederalkoxy substituiert sein können und einen oder mehrere Substituenten X tragen. Weiter bevorzugt sind Verbindungen der Formel I, in denen sowohl Ar als auch Ar' für Phenyl stehen, und die im übrigen durch Niederalkyl und/oder Niederalkoxy substituiert sein können und einen oder mehrere Substituenten X tragen. Beispiele hierfür sind Diphenylmethan-, Diphenylethan- oder Diphenylpropan-Verbindungen, Diphenylether, Diphenylsulfide, Diphenylsulfoxide, Diphenylsulfone, Diphenylamine, Diphenylammoniumverbindungen und Diphenylketone, die im übrigen durch Niederalkyl und/oder Niederalkoxy substituiert sein können und einen oder mehrere Substituenten X tragen.

In einer speziellen Ausführungsform werden Verbindungen der Formel I verwendet, in denen Ar und Ar' dem gleichen Typus aromatischer Ringsysteme angehören und unabhängig voneinander durch Niederalkyl und/oder Niederalkoxy substituiert sind. Beispiele hierfür sind 3-Phenoxy-toluol und 3-Methyl-4'-methoxy-diphenylsulfon, die im übrigen noch eine oder mehrere Gruppen X tragen.

In einer weiteren speziellen Ausführungsform werden Verbindungen der Formel I verwendet, in denen Ar und Ar' dem gleichen Typus aromatischer Ringsysteme angehören und entweder nicht durch Niederalkyl oder Niederalkoxy substituiert sind oder symmetrisch durch gleiche Gruppen Niederalkyl oder Niederalkoxy substituiert sind. Beispiele hierfür sind Diphenylmethan, 2,2-Diphenylpropan, Diphenylether, Diphenylsulfid, Diphenylsulfoxid, Diphenylsulfon, Diphenylamin, Diphenyl-methylamin, Diphenylketon, oder 3,3'-Diethoxy-diphenylsulfon oder 4,4'-Dimethyl-diphenylmethan, die im übrigen noch eine oder mehrere Gruppen X tragen.

Geeignete Verbindungen der Formel I sind beispielsweise solche, in denen der Substituent X für Niederalkyl steht, das durch Y substituiert ist. Hierunter fallen unter anderem 3-Phenoxy-benzylalkohol, 3-Benzoyl-benzylalkohol oder 4-Aminobutyl-diphenylsulfid.

Insbesondere werden im erfindungsgemässen Verfahren Verbindungen der Formel I bevorzugt, in denen mindestens ein Substituent X für eine Gruppe Y steht, das heisst solche Verbindungen der Formel I, in denen die polare funktionelle Gruppe Y unmittelbar an ein Ringatom von Ar oder Ar' gebunden ist. Hierunter fallen unter anderem 3-Phenoxy-benzaldehyd, 4,4'-Diamino-diphenylmethan, 4,4'-Diamino-diphenylsulfon, 4,4'-Diamino-diphenylammoniumsulfat, 3,4-Diamino-benzophenon, 4,4'-Diamino-diphenylether, 2,4-Dihydroxy-benzophenon, 2,2-Bis-(4-hydroxy-phenyl)propan, 2-Benzoyl-benzoesäure, Benzophenon-3,3′,4,4′-tetracarbonsäure, Diphenylamin-4-sulfonsäuresalze, wie das entsprechende Barium- oder Calciumsalz, Diphenylamin-2-carbonsäure, 3,3′,4,4′-Tetrahydroxy-diphenylsulfid, 4,4′-Dihydroxy-diphenylsulfon, sulfonierter 3-Phenoxybenzylalkohol, oder sulfatiertes bzw. phosphatiertes 2,2-Bis-(4-hydroxyphenyl)propan.

Unter sulfonierten, sulfatierten oder phosphatierten Verbindungen, wie im vorstehenden Absatz erwähnt, werden Verbindungen verstanden, die aus den zugrundeliegenden Verbindungen gemäss Standardmethoden, z.B. gemäss Organikum, 9. Auflage, VEB Deutscher Verlag der Wissenschaften, Berlin 1970, Seite 336 ff, hergestellt werden können. Diese Verfahren reichen in vielen Fällen aus, um aus Verbindungen der Formel I, in denen eine Gruppe Y fehlt, Verbindungen der Formel I herzustellen, in denen geeignete Gruppen Y vorhanden sind. Ferner können auf diese Weise auch in Verbindungen der Formel I, d.h. solchen, die bereits eine Gruppe Y aufweisen, wie beispielsweise Hydroxy, zusätzliche Gruppen Y eingeführt werden.

Die Verbindungen der Formel I sind bekannt oder auf an sich bekannte Weise herstellbar, beispielsweise wie im vorangehenden Absatz erwähnt. Einige Klassen von Verbindungen der Formel I lassen sich während des erfindungsgemässen Verfahrens in situ aus Vorstufen herstellen, die zum Teil besser lagerstabil oder besonders gut zugänglich sind. Die Vorstufen hydrolysieren dabei in wässriger Phase zu Verbindungen der Formel I.

Dies gilt beispielsweise für Verbindungen der Formel I, in denen Ar und/oder Ar' vicinal zwei Gruppen Y aufweisen, die Carboxy bedeuten. In einem derartigen Fall bietet sich die Verwendung des entsprechenden Carbonsäureanhydrids an. Daher ist die Verbindung, die geeigneterweise eingesetzt wird, wenn eine Kontaktlinse mit Benzophenon-3,3′,4,4′-tetracarbonsäure behandelt werden soll, das Benzophenon-3,3′,4,4′-tetracarbonsäure-dianhydrid. Dies gilt ferner z.B. für Verbindungen der Formel I, die Gruppen Y aufweisen, worin Y für Sulfonato steht. In einem so gelagerten Fall ist es möglich, das entsprechende Sulfochlorid zu verwenden. Daher ist die Verbindung, die eingesetzt werden kann, wenn eine Kontaktlinse mit sulfoniertem 3-Phenoxybenzylalkohol behandelt werden soll, z.B. sulfochlorierter 3-Phenoxybenzylalkohol, der Chlorsulfonyl-Gruppen (-SO₂Cl) aufweist. Chlorsulfonierte aromatische Verbindungen, die hierfür benötigt werden, sind ebenfalls z.B. gemäss Organikum herstellbar.

Das erfindungsgemässe Verfahren wird durchgeführt, indem man eine Kontaktlinse mit einer Verbindung der Formel I in flüssiger Phase behandelt. Die flüssige Phase wird dabei unter dem Gesichtspunkt gewählt, dass die Oberflächenspannung der Flüssigkeit an diejenige der Kontaktlinse angepasst wird. Die flüssige Phase umfasst in der Regel die Verbindung der Formel I, die in einem wässrigen Medium gelöst oder suspendiert ist. Ausser Wasser können z.B. auch Lösungsmittel wie spezielle Niederalkanole, insbesondere Methanol, oder niedermolekulare Ketone, insbesondere Aceton, verwendet werden, ebenso Gemische davon mit Wasser. Ebenfalls können Säuren oder Basen zugesetzt werden.

Der Behandlungsschritt erfolgt geeigneterweise in der Form, dass die Kontaktlinse in die flüssige Phase eingelegt wird. Im Zusammenhang mit dieser Offenbarung wird unter dem Begriff der Behandlung aber auch jede andere Form des ausreichend intensiven Miteinander-in-Kontakt-Bringens verstanden. Darunter fallen z.B. Massnahmen wie Imprägnieren, Besprühen, Bemalen, Vermischen oder Eintauchen.

Die Reaktionsbedingungen sind innerhalb weiter Grenzen unkritisch. Grundsätzlich gilt, dass erhöhte Temperaturen die erforderliche Behandlungszeit herabsetzen, während sich die Behandlungszeiten beiniedrigeren Temperaturen erhöhen. Geeignete Temperaturen liegen im Bereich von etwa 10°C bis zur Siedetemperatur der verwendeten flüssigen Phase, insbesondere von etwa Raumtemperatur bis etwa 80°C, bevorzugt ist ein Bereich von etwa 40°C bis etwa 70°C. Die Behandlungsdauer liegt zwischen wenigen Minuten und etwa einem Tag, insbesondere zwischen etwa 20 Minuten und etwa 12 Stunden. Bevorzugte Kombinationen sind beispielsweise Behandlungen bei Raumtemperatur während 12 Stunden oder bei 70°C während 20 Minuten. Im übrigen sind die im Einzelfall optimalen Bedingungen abhängig von den speziell verwendeten Komponenten und können vom Fachmann mühelos angepasst werden.

Den Abschluss der erfindungsgemässen Behandlung bildet die Entnahme der Kontaktlinse aus der flüssigen Phase. An diesen Schritt schliesst sich geeigneterweise ein Abspülschritt an. Geeignete Abspülmittel sind inerte Lösungsmittel, die der Kontaktlinse nicht schaden, die jedoch Reste der Verbindung der Formel I von der Linse entfernen. Hierfür kommen z.B. Glycerin, Ethanolamin, Polyvinylalkohol oder insbesondere Wasser, auch isotonische Kochsalzlösung, in Frage. Im Anschluss daran wird die modifizierte Linse in geeigneter Weise aufbewahrt oder bestimmungsgemäss verwendet.

Die Kontaktlinsen, die geeigneterweise nach dem erfindungsgemässen Verfahren behandelt werden, sind Kontaktlinsen mit einer hydrophoben oder nicht in ausreichendem Masse hydrophilen Oberfläche. Diese Kontaktlinsen sind regelmässig schlecht in Wasser quellfähig. Sie enthalten ohne erfindungsgemässe Behandlung nach vollständiger Quellung in Wasser normalerweise weniger als 10 Gewichtsprozent Wasser, üblicherweise etwa bis zu 3 Prozent Wasser und häufig nur bis zu 1,5 Prozent Wasser. Typische Werte des Wassergehalts liegen bei etwa 1 Gewichtsprozent Wasser und noch darunter.

Unter einer Kontaktlinse wird im Zusammenhang mit der vorliegenden Erfindung insbesondere, aber nicht ausschliesslich, eine fertige Kontaktlinse verstanden, bei der beide Oberflächen fertig ausgebildet sind. Fertig ausgebildete Oberflächen sind dabei die Innenkurven oder Aussenkurven, die der Kontaktlinsen die gewünschten optischen Eigenschaften verleihen, ohne dass bei der weiteren Bearbeitung noch Material von der Linse entfernt wird, z.B. durch spanabhebende Drehverfahren. Zusätzlich fallen unter den Begriff Kontaktlinse im Rahmen der vorliegenden Offenbarung aber auch Vorstufen zu Kontaktlinsen, bei denen ein Teil der Oberfläche bereits fertig ausgebildet ist, ein anderer Teil aber noch nicht. Dies können beispielsweise Semimold-Produkte sein. Es ist ohne weiteres möglich, das erfindungsgemässe Verfahren auf die bereits fertigen Oberflächen derartiger Vorstufen von Kontaktlinsen anzuwenden und danach die restlichen Oberflächen fertig auszubilden.

Im wesentlichen handelt es sich bei den Kontaktlinsen, die erfindungsgemäss behandelt werden können, um Kontaktlinsen, deren Copolymer Gruppen der Art Diphenylmethan, Dicyclohexylmethan, 2,2-Diphenylpropan, Diphenylether, Diphenylsulfid, Diphenylsulfon und/oder Organosiloxan-Gruppen enthält. Bevorzugt eignen sich Kontaktlinsen mit Organosiloxan-Gruppen, wie z.B. Silikonkautschuke. Unter Organo wird in diesem Zusammenhang insbesondere Niederalkyl, speziell Methyl, und Phenyl verstanden. Organosiloxan-Gruppen sind daher insbesondere Dimethylsiloxan-Gruppen, Methyl-phenyl-siloxan-Gruppen und Diphenylsiloxan-Gruppen. Beispiele für derartige Materialien sind u.a. in den US-A-4,424,328; 4,463, 149; 4,625,007 und 4,686,267 beschrieben.

Die prominentesten Vertreter der Art von Kontaktlinsen, auf die sich das erfindungsgemässe Verfahren anwenden lässt, sind zahlreiche sogenannte RGP-Linsen (rid gas permeable), d.h. harte gasdurchlässige Kontaktlinsen. Sie sind üblicherweise unter anderem aus Siloxan(meth)acrylaten aufgebaut, und enthalten daneben häufig noch fluorierte Comonomere oder auch Anteile von typischen hydrophilen Comonomeren (wie Hydroxyethylmethacrylat, Methacrylsäure oder Vinylpyrrolidon) oder typischen hydrophoben Comonomeren (wie Methylmethacrylat).

Beispiele für Kontaktlinsen, die Diphenylmethan-Gruppen enthalten, sind solche, die entsprechende Polyurethane enthalten, z.B. Polyurethane aus 4,4'-Diaminodiphenylmethan und einem Isocyanat oder aus Diphenylmethan-4,4'-diisocyanat und einem Amin, oder Polyimide. Auch Kontaktlinsen, die Dicyclohexylmethan-Gruppen enthalten, können diese Gruppen als Polyurethane enthalten, z.B. als Polyurethane aus Dicyclohexylmethan-4,4'-diisocyanat und einem Amin oder aus 4,4'-Diamino-dicyclohexylmethan und einem Isocyanat; oder als Polyamide. Beispiele für Kontaktlinsen, die 2,2-Diphenylpropan-Gruppen enthalten, finden sich unter Vertretern aus bestimmten Polycarbonaten, Polysulfonen und Epoxidharzen. Beispiele für Kontaktlinsen, die Diphenylether-Gruppen enthalten, finden sich unter Vertretern aus bestimmten Polyethern, Poly(ether)sulfonen und Polyetherketonen. Die vorstehend genannten Bestandteile von Copolymerisaten eignen sich für Kontaktlinsen naturgemäss nur dann, wenn die aus ihnen erhältlichen Polymerisate den bekannten optischen Anforderungen für Kontaktlinsen genügen.

Die folgenden Beispiele dienen ausschliesslich dazu, den Gegenstand der Erfindung zu erläutern. Sie sind jedoch nicht geeignet, den Gegenstand der Erfindung in irgendeiner Weise, etwa auf den Gegenstand der Beispiele, zu beschränken.

Beispiel 1: Es wird das der Kontaktlinse PERSECON CE der Firma CIBA Vision GmbH, Aschaffenburg, zugrundeliegende Material verwendet. Um die Versuchsbedingungen einfacher zu gestalten, wird statt einer fertigen Kontaktlinse ein als Scheibchen ausgebildetes, sonst aber mit der Kontaktlinse identisches, Copolymeres verwendet. Diese Kontaktlinse besteht aus einem Copolymer auf der Basis Silikon mit Methylmethacrylat. Das Scheibchen wird mit einer gesättigten Lösung von Benzophenon-3,3',4,4'-tetracarbonsäure-dianhydrid in Wasser/Methanol (1 : 2 v/v) während 12 Stunden bei Raumtemperatur in Berührung gebracht. Danach wird das Scheibchen aus der Lösung entfernt und mit deionisiertem Wasser gewaschen.

Beispiel 2: Gemäss Beispiel 1 behandeltes Material lässt sich mit dem kationischen Farbstoff Pyronin G anfärben. Dies gelingt mit PERSECON CE, das nicht erfindungsgemäss behandelt wurde (Kontrolle), nicht.

Beispiel 3: Gemäss Beispiel 1 behandeltes Material weist eine hydrophile Oberfläche auf.

Dies wird durch die Veränderung des Kontaktwinkels belegt. Der Kontaktwinkel liegt vor der erfindungsgemässen Behandlung bei etwa 60°, nach der erfindungsgemässen Behandlung bei etwa 20 bis 30° (Blasenmethode).

Beispiel 4: Die hydrophile Oberfläche des gemäss Beispiel 1 behandelten Materials ist darüberhinaus abriebfest. Die Abriebfestigkeit wird wie folgt untersucht. Das behandelte Scheibchen wird auf einem Gefässboden festgeklemmt. Ein Poliertuch wird mit einem Auflagegewicht von 370 g aufgelegt. Scheibchen und Poliertuch werden mit Boston Cleaner^{®}, einem abrasiven Reiniger für Kontaktlinsen, bedeckt. Während fünf Minuten wird das Gefäss mit dem Scheibchen in Rotation versetzt (505 Umdrehungen/Minute), zur gleichen Zeit wird das Poliertuch mechanisch hin und herbewegt (32 Hübe/Minute). Danach wird der Kontaktwinkel erneut ermittelt. Der Kontaktwinkel ist nach der beschriebenen Behandlung weitgehend unverändert, d.h. die erfindungsgemässe Erhöhung der Hydrophilie ist durch die rauhen Versuchsbedingungen nicht oder jedenfalls nicht merklich wieder abgebaut worden.

Beispiel 5: Auch im Vergleich mit dem Stand der Technik erweist sich das erfindungsgemässe Verfahren als überlegen: PERSECON CE Linsen mit einem Kontaktwinkel von 61° (unbehandelt) werden einer Plasmabehandlung ausgesetzt, sie weisen danach eine Kontaktwinkel von 43° (behandelt nach Stand der Technik) auf. Die Anwendung der in Beispiel 4 beschriebenen Reinigungsprozedur lässt den Kontaktwinkel auf 66° ansteigen.

Demgegenüber führt die erfindungsgemässe Behandlung von PERSECON CE Linsen, ausgehend ebenso von einem Kontaktwinkel von 61° (unbehandelt), zu einem Kontaktwinkel von 24° (behandelt gemäss dieser Erfindung). Die Anwendung der in Beispiel 4 beschriebenen Reinigungsprozedur lässt den Kontaktwinkel nur deutlich geringfügiger ansteigen, nämlich auf 36°.

## Patentansprüche

1. Verfahren zur Hydrophilierung ein Kontaktlinse, dadurch gekennzeichnet dass man die Kontaktlinse mit einer Verbindung der Formel I behandelt,
Ar-Z-Ar' (I)
worin Ar und Ar' unabhängig voneinander einen aromatischen Rest bedeuten, der mit Niederalkoxy und/oder durch Niederalkyl substituiert sein kann, und worin einer der Reste Ar oder Ar' oder beide Reste Ar und Ar' einen oder mehrere Substituenten X tragen, die unabhängig voneinander ausgewählt sind unter einer polaren funktionellen Gruppe Y, Niederalkyl, welches durch eine polare funktionelle Gruppe Y substituiert ist, und Niederalkoxy, welches durch eine polare funktionelle Gruppe Y substituiert ist, und worin Z für eine zweiwertige Gruppe steht, die Ar und Ar' durch ein bis sechs Atome voneinander trennt, wobei Niederalkoxy und Niederalkyl Verbindungen und Reste mit bis zu 7 Kohlenstoffatomen umfassen.

2. Verfahren gemäss Anspruch 1, dadurch gekennzeichnet, dass man eine Verbindung der Formel I verwendet, worin Ar und Ar' ausgewählt sind unter Phenyl, Naphthyl und den monovalenten Resten von Pyridin, Pyrimidin, Pyrazin, Furan, Thiophen, Pyrrol und Thiazol.

3. Verfahren gemäss Anspruch 1, dadurch gekennzeichnet, dass man eine Verbindung der Formel I verwendet, worin Ar und Ar' Phenyl bedeuten.

4. Verfahren gemäss Anspruch 1, dadurch gekennzeichnet, dass man eine Verbindung der Formel I verwendet, worin die polare funktionelle Gruppe Y ausgewählt ist unter Hydroxy (-OH), Mercapto (-SH), Amino (-NH₂), Formyl (-CHO), Carboxy (-COOH), Carbamoyl (-CONH₂), Niederalkoxycarbonyl (-COOR, worin R für Niederalkyl steht), Carboxylato (-COO-), Sulfonato (-SO₃-), der Schwefelsäureester-Gruppe (-SO₄-), Sulfato (-SO₄²⁻), Phosphato (-PO₄³⁻), und Ammonio (-NH₃⁺).

5. Verfahren gemäss Anspruch 1, dadurch gekennzeichnet, dass man eine Verbindung der Formel I verwendet, worin die polare funktionelle Gruppe Y Sulfonato oder Hydroxy bedeutet.

6. Verfahren gemäss Anspruch 1, dadurch gekennzeichnet, dass man eine Verbindung der Formel I verwendet, worin die Gruppe Z Ar und Ar' durch ein Atom voneinander trennt und ausgewählt ist unter Methylen (-CH₂-), 1,1-Ethylen (-CH(CH₃)-), 2,2-Propylen (-C(CH₃)₂-), Sauerstoff, (-O-), Schwefel (-S-), Sulfenyl (-SO-), Sulfonyl (-SO₂-), Amino (-NH-), Ammonio (-NH₂⁺-), Carbonyl (-CO-) und Methylamino (-N(CH₃)-).

7. Verfahren gemäss Anspruch 1, dadurch gekenneichnet, dass man eine Verbindung der Formel I verwendet, worin die Gruppe Z Carbonyl bedeutet.

8. Verfahren gemäss Anspruch 1, dadurch gekennzeichnet, dass man eine Verbindung der Formel I verwendet, worin Ar und Ar' ausgewählt sind unter Phenyl, Naphthyl, den monovalenten Resten von Pyridin, Pyrimidin, Pyrazin, Furan, Thiophen, pyrrol und Thiazol, die polare funktionelle Gruppe Y ausgewählt ist unter Hydroxy (-OH), Mercapto (-SH), Amino (-NH₂), Formyl (-CHO), Carboxy (-COOH), Carbamoyl (-CONH₂), Niederalkoxycarbonyl (-COOR, worin R für Niederalkyl steht), Carboxylato (-COO-), Sulfonato (-SO₃⁻), der Schwefelsäureester-Gruppe (-SO₄⁻ ), Sulfato (-SO₄²⁻), Phosphato (-PO₄³⁻), und Ammonio (-NH₃⁺), und die Gruppe Z ausgewählt ist unter Methylen (-CH₂-), 1,1-Ethylen (-CH(CH₃)-), 2,2-Propylen (-C(CH₃)₂-), Sauerstoff, (-O-), Schwefel (-S-), Sulfenyl (-SO-), Sulfonyl (-SO₂-), Amino (-NH-), Ammonio (-NH₂⁺-), Carbonyl (-CO-) und Methylamino (-N(CH₃)-).

9. Verfahren gemäss Anspruch 1, dadurch gekennzeichnet, dass man eine Verbindung der Formel I verwendet, worin Ar und Ar' ausgewählt sind unter Phenyl, Naphthyl, den monovalenten Resten von Pyridin, Pyrimidin, Pyrazin, Furan, Thiophen, pyrrol und Thiazol, die polare funktionelle Gruppe Y Sulfonato oder Carboxy bedeutet und die Gruppe Z für Carbonyl steht.

10. Verfahren gemäss Anspruch 1, dadurch gekennzeichnet, dass man eine Verbindung der Formel I verwendet, worin Ar und Ar' Phenyl bedeuten, die polare funktionelle Gruppe Y ausgewählt ist unter Hydroxy (-OH), Mercapto (-SH), Amino (-NH₂), Formyl (-CHO), Carboxy (-COOH), Carbamoyl (-CONH₂), Niederalkoxycarbonyl (-COOR, worin R für Niederalkyl steht), Carboxylato (-COO⁻), Sulfonato (-SO₃⁻), der Schwefelsäureester-Gruppe (-SO₄⁻), Sulfato (-SO₄²⁻), Phosphato (-PO₄³⁻), und Ammonio (-NH₃⁺), und die Gruppe Z für Carbonyl steht.

11. Verfahren gemäss Anspruch 1, dadurch gekennzeichnet, dass man eine Verbindung der Formel I verwendet, worin Ar und Ar' Phenyl bedeuten, die polare funktionelle Gruppe Y Carboxy oder Sulfonato bedeutet und die Gruppe Z ausgewählt ist unter Methylen (-CH₂-), 1,1-Ethylen (-CH(CH₃)-), 2,2-Propylen (-C(CH₃)₂-), Sauerstoff, (-O-), Schwefel (-S-), Sulfenyl (-SO-), Sulfonyl (-SO₂-), Amino (-NH-), Ammonio (-NH₂⁺-), Carbonyl (-CO-) und Methylamino (-N(CH₃)-).

12. Verfahren gemäss Anspruch 1, dadurch gekennzeichnet, dass eine Vorstufe einer Verbindung verwendet wird, die in wässriger Phase unter Hydrolysebedingungen in situ eine Verbindung der Formel I bildet.

13. Verfahren gemäss Anspruch 1, dadurch gekennzeichnet, dass eine Kontaktlinse enthaltend weniger als 10 Gewichtsprozent Wasser behandelt wird.

14. Verfahren gemäss Anspruch 1, dadurch gekennzeichnet, dass eine harte gasdurchlässige Kontaktlinse behandelt wird.

15. Verfahren gemäss Anspruch 1, dadurch gekennzeichnet, dass eine Siloxangruppen enthaltende Kontaktlinse behandelt wird.

16. Verfahren gemäss Anspruch 1, dadurch gekennzeichnet, dass als Kontaktlinse eine Vorstufe einer Kontaktlinse behandelt wird, bei der ein Teil der Oberfläche bereits fertig ausgebildet ist, ein anderer Teil noch nicht.

## Claims

1. A process for rendering a contact lens hydrophilic, which comprises treating the contact lens with a compound of formula I
Ar-Z-Ar' (I)
wherein Ar and Ar' are each independently of the other an aromatic radical that may be substituted by lower alkoxy and/or by lower alkyl and wherein one of the radicals Ar and Ar' or both radicals Ar and Ar' contain(s) one or more substituents X selected independently of one another from a polar functional group Y, lower alkyl substituted by a polar functional group Y, and lower alkoxy substituted by a polar functional group Y, and wherein Z is a divalent group that separates Ar and Ar' from each other by from one to six atoms, lower alkoxy and lower alkyl comprising compounds and radicals having up to 7 carbon atoms.

2. A process according to claim 1 wherein there is used a compound of formula I wherein Ar and Ar' are selected from phenyl, naphthyl and monovalent radicals of pyridine, pyrimidine, pyrazine, furan, thiophene, pyrrole and thiazole.

3. A process according to claim 1 wherein there is used a compound of formula I wherein Ar and Ar' are phenyl.

4. A process according to claim 1 wherein there is used a compound of formula I wherein the polar functional group Y is selected from hydroxy (-OH), mercapto (-SH), amino (-NH₂), formyl (-CHO), carboxy (-COOH), carbamoyl (-CONH₂), lower alkoxycarbonyl (-COOR, wherein R is lower alkyl), carboxylato (-COO⁻), sulfonato (-SO₃-), the sulfuric acid ester group (-SO₄-), sulfato (-SO₄²⁻), phosphato (-PO₄³⁻) and ammonio (-NH₃⁺).

5. A process according to claim 1 wherein there is used a compound of formula I wherein the polar functional group Y is sulfonato or hydroxy.

6. A process according to claim 1 wherein there is used a compound of formula I wherein the qroup Z separates Ar and Ar' from each other by one atom and is selected from methylene (-CH₂-), 1,1-ethylene (-CH(CH₃)-), 2,2-propylene (-C(CH₃)₂-), oxygen (-O-), sulfur (-S-), sulfenyl (-SO-), sulfonyl (-SO₂-), amino (-NH-), ammonio (-NH₂+-), carbonyl (-CO-) and methylamino (-N(CH₃)-).

7. A process according to claim 1 wherein there is used a compound of formula I wherein the group Z is carbonyl.

8. A process according to claim 1 wherein there is used a compound of formula I wherein Ar and Ar' are selected from phenyl, naphthyl and monovalent radicals of pyridine, pyrimidine, pyrazine, furan, thiophene, pyrrole and thiazole, the polar functional group Y is selected from hydroxy (-OH), mercapto (-SH), amino (-NH₂), formyl (-CHO), carboxy (-COOH), carbamoyl (-CONH₂), lower alkoxycarbonyl (-COOR, wherein R is lower alkyl), carboxylato (-COO⁻), sulfonato (-SO₃-), the sulfuric acid ester group (-SO₄-), sulfato (-SO₄²⁻), phosphato (-PO₄³⁻) and ammonio (-NH₃+), and the group Z is selected from methylene (-CH₂-), 1,1-ethylene (-CH(CH₃)-), 2,2-propylene (-C(CH₃)₂-), oxygen (-O-), sulfur (-S-), sulfenyl (-SO-), sulfonyl (-SO₂-), amino (-NH-), ammonio (-NH2⁺⁻), carbonyl (-CO-) and methylamino (-N(CH₃)-).

9. A process according to claim 1 wherein there is used a compound of formula I wherein Ar and Ar' are selected from phenyl, naphthyl and monovalent radicals of pyridine, pyrimidine, pyrazine, furan, thiophene, pyrrole and thiazole, the polar functional group Y is sulfonato or carboxy, and the group Z is carbonyl.

10. A process according to claim 1 wherein there is used a compound of formula I wherein Ar and Ar' are phenyl, the polar functional group Y is selected from hydroxy (-OH), mercapto (-SH), amino (-NH₂), formyl (-CHO), carboxy (-COOH), carbamoyl (-CONH₂), lower alkoxycarbonyl (-COOR, wherein R is lower alkyl), carboxylato (-COO⁻), sulfonato (-SO₃-), the sulfuric acid ester group (-SO₄-), sulfato (-SO₄²⁻), phosphato (-PO₄³⁻) and ammonio (-NH₃⁺), and the group Z is carbonyl.

11. A process according to claim 1 wherein there is used a compound of formula I wherein Ar and Ar' are phenyl, the polar functional group Y is carboxy or sulfonato, and the group Z is selected from methylene (-CH₂-), 1,1-ethylene (-CH(CH₃)-), 2,2-propylene (-C(CH₃)₂-), oxygen (-O-), sulfur (-S-), sulfenyl (-SO-), sulfonyl (-SO₂-), amino (-NH-), ammonio (-NH₂⁺⁻), carbonyl (-CO-) and methylamino (-N(CH₃)-).

12. A process according to claim 1 wherein there is used a precursor of a compound which, in aqueous phase under hydrolysis conditions, forms a compound of formula I in situ.

13. A process according to claim 1 wherein a contact lens comprising less than 10 % by weight of water is treated.

14. A process according to claim 1 wherein a hard, gaspermeable contact lens is treated.

15. A process according to claim 1 wherein a contact lens comprising siloxane groups is treated.

16. A process according to claim 1 wherein there is treated, as the contact lens, a precursor of a contact lens, in which a portion of the surface is already finished and another portion is not.

## Revendications

1. Procédé d'hydrophilisation d'une lentille de contact, caractérisé en ce qu'on traite la lentille de contact avec un composé de formule I,
Ar-Z-Ar' (I)
dans laquelle Ar et Ar' représentent indépendamment l'un de l'autre un radical aromatique, qui peut être substitué par un alcoxy inférieur et/ou par un alkyle inférieur, et où l'un des radicaux Ar ou Ar' ou les deux radicaux Ar et Ar' portent un ou plusieurs substituants X choisis indépendamment l'un de l'autre, parmi un groupe fonctionnel polaire Y, un alkyle inférieur substitué par un groupe fonctionnel polaire Y et un alcoxy inférieur substitué par un groupe fonctionnel polaire Y, et où Z représente un groupe bivalent qui sépare Ar d'Ar' par de 1 à 6 atomes, l'alcoxy inférieur et l'alkyle inférieur comprenant des composés et des radicaux ayant jusqu'à 7 atomes de carbone.

2. Procédé selon la revendication 1, caractérisé en ce qu'on utilise un composé de formule I, dans laquelle Ar et Ar' sont choisis parmi phényle, naphtyle et les radicaux monovalents de pyridine, pyrimidine, pyrazine, furanne, thiophène, pyrrole et thiazole.

3. Procédé selon la revendication 1, caractérisé en ce qu'on utilise un composé de formule I dans laquelle Ar et Ar' représentent un phényle.

4. Procédé selon la revendication 1, caractérisé en ce qu'on utilise un composé de formule I, dans laquelle le groupe fonctionnel polaire Y est choisi parmi hydroxy (-OH), mercapto(-SH), amino(-NH₂) , formyle(-CHO), carboxy (-COOH), carbamoyle(-CONH₂), alcoxy inférieur, carbonyle (-COOR, où R représente un alkyle inférieur), carboxylato (-COO⁻), sulfonato (-SO₃⁻), le groupe ester d'acide sulfonique (-SO₄-), sulfato (-SO₄²⁻), phosphato (-PO₄³⁻) et ammonio (-NH₃+).

5. Procédé selon la revendication 1, caractérisé en ce qu'on utilise la formule I dans lequel le groupe fonctionnel polaire Y représente un sulfonato ou un hydroxy.

6. Procédé selon la revendication 1, caractérisé en ce qu'on utilise un composé de formule I, dans lequel le groupe Z sépare Ar et Ar' l'un de l'autre par un atome et est choisi parmi méthylène (-CH₂-), 1,1-éthylène (-CH(CH₃)-, 2,2-propylène (-C(CH₃)₂-), oxygène (-O-), soufre (-S-), sulfényle (-SO-), sulfonyle (-SO₂-), amino (-NH-), ammonio (-NH₂+-), carbonyle (-CO-) et méthylamino (-N(CH₃)-).

7. Procédé selon la revendication 1, caractérisé en ce qu'on utilise un composé de formule I dans lequel le groupe Z représente un carbonyle.

8. Procédé selon la revendication 1, caractérisé en ce qu'on utilise un composé de formule I dans lequel Ar et Ar' sont choisis parmi phényle, naphtyle, les radicaux monovalents de pyridine, pyrimidine, pyrazine, furanne, thiophène, pyrrole et thiazole, le groupe fonctionnel polaire Y est choisi parmi hydroxy (-OH), mercapto (-SH), amino (-NH₂), formyle(-CHO), carboxy (-COOH), carbamoyle(-CONH₂), alcoxy inférieur carbonyle -(COOR, où R représente un alkyle inférieur), carboxylato (-COO⁻), sulfonato (-SO₃-), le groupe ester d'acide sulfurique (-SO₄-), sulfato (-SO₄²⁻), phosphato (-PO₄³⁻), et ammonio (-NH₃+) et ce groupe Z est choisi parmi méthylène (-CH₂-), 1,1-éthylène (-CH(CH₃)-), 2,2-propylène (-C(CH₃)₂-), oxygène (O-), soufre (-S-), sulfényle (-SO-), sulfonyle (-SO₂-), amino (-NH-) , ammonio (-NH₂+-), carbonyle (-CO-) et méthylamino (-N(CH₃)-).

9. Procédé selon la revendication I, caractérisé en ce qu'on utilise un composé de formule I, où Ar et Ar' sont choisis parmi phényle, naphtyle, les radicaux monovalents de pyridine, pyrimidine, pyrazine, furanne, thiophène, pyrrole et thiazole, le groupe fonctionnel polaire Y représente un sulfonato ou un carboxy et le groupe Z représente un carbonyle.

10. Procédé selon la revendication 1, caractérisé en ce qu'on utilise un composé de formule I dans lequel Ar et Ar' représentent un phényle, le groupe fonctionnel polaire Y est choisi parmi hydroxy (-OH), mercato (-SH), amino (-NH₂), formyle (-CHO), carboxy (-COOH), carbamoyle (-CONH₂), alcoxy inférieur carbonyle (-COOR, où R représente un alkyle inférieur), carboxylato (-COO⁻), sulfonato (-SO₃-), le groupe ester d'acide sulfurique (-SO₄-), sulfato (-SO₄²⁻), phosphato (-PO₄³⁻) et ammonio (-NH₃+) et le groupe Z représente un carbonyle.

11. Procédé selon la revendication 1, caractérisé en ce qu'on utilise un composé de formule I, dans lequel Ar et Ar' représentent un phénylène, le groupe fonctionnel polaire Y représente un carboxy ou sulfonato et le groupe Z est choisi parmi le méthylène (-CH₂-), 1,1-éthylène (-CH(CH₃)-), 2,2-propylène (-C(CH₃)₂-) , oxygène (-O-) , soufre (-S-), sulfényle (-SO-), sulfonyle (-SO₂-), amino (-NH-), ammonio (-NH₂+-), carbonyle (-CO-) et méthylamino (-N(CH₃)-).

12. Procédé selon la revendication 1, caractérisé en ce qu'on utilise un précurseur d'un composé qui forme en phase aqueuse dans des conditions d'hydrolyse in situ un composé de formule I.

13. Procédé selon la revendication 1, caractérisé en ce qu'on traite une lentille de contact contenant moins de 10% en poids d'eau.

14. Procédé selon la revendication 1, caractérisé en ce qu'on traite une lentille de contact dure perméable aux gaz.

15. Procédé selon la revendication 1, caractérisé en ce qu'on traite une lentille de contact contenant des groupes siloxane.

16. Procédé selon la revendication 1, caractérisé en ce qu'on traite comme lentille de contact un précurseur de lentille de contact dans lequel une partie de la surface est déjà prête à l'emploi, le reste ne l'étant pas encore.
